# EUROPEAN PATENT SPECIFICATION

(11) **EP 3 278 382 B1**
(45) Date of publication and mention of the grant of the patent: **26.06.2019**
(21) Application number: 16771397.3
(22) Date of filing: 31.03.2016
(51) Int. Cl.: H01M 2/20, H01M 2/26, H01M 2/04, H01M 2/24, H01M 2/34, H01M 10/0525, H01R 11/28

(54) **ELECTRIC CONNECTOR AND BATTERY COMPRISING THE SAME**
ELEKTRISCHER VERBINDER UND BATTERIE DAMIT
CONNECTEUR ÉLECTRIQUE ET BATTERIE LE COMPRENANT

(30) Priority: 31.03.2015 CN 201520188443 U
(43) Date of publication of application: 07.02.2018
(73) Proprietor: BYD Company Limited, Shenzhen, Guangdong 518118 (CN)
(72) Inventor: JIANG, Luxia, Shenzhen Guangdong 518118 (CN); YANG, Keli, Shenzhen Guangdong 518118 (CN); ZHU, Yan, Shenzhen Guangdong 518118 (CN); ZHU, Jianhua, Shenzhen Guangdong 518118 (CN)
(74) Representative: Hoffmann Eitle
(86) International application number: PCT/CN2016/077994
(87) International publication number: WO 2016/155642

(56) References cited:
- WO-A1-2014/042005
- CN-A- 104 051 704
- CN-U- 204 596 866
- JP-A- H1 125 951
- US-A1- 2005 287 431

## Description

### FIELD

The present disclosure relates to the field of battery, and more particularly relates to an electric connector and a battery comprising the same.

### BACKGROUND

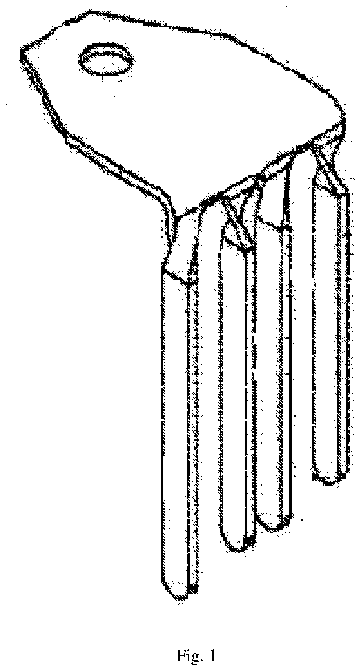

In the related art, in a battery including a plurality of winding cores, an electrode terminal of a cover plate is connected to tabs of the winding cores via an electric connector. The electric connector is integrally formed and locally thinned and twisted to form a plurality of welding portions, as shown in Fig. 1. The welding portions are welded to the tabs via ultrasonic welding. During the process of ultrasonic welding, a welding head may occupy a larger space, which may cause interference with adjacent tabs while the plurality of winding cores is provided. Thus the welding between the electric connector and the tabs may be inconvenient, which may affect welding quality. Moreover, the cost of the local thinning and twisting process of the electric connector is very high, and the thinned and twisted portion has a complex structure, concentrative stress, poor flow capacity and high current density. In other words, the electric connector shows not only poor structure stability, but also high temperature during high-rate charge/discharge, which may destroy the stability of a system and cause a security problem.

WO 2014/042005 A1 refers to a connector of a current collecting member that is welded to an electrode plate of an electrode assembly, which is constituted by a rolled material, and the current collecting member and the electrode assembly are bonded to each other by vibration welding.

Another document is US 2005/0287431 A1 referring to a rechargeable battery.

### SUMMARY

The present disclosure aims to solve at least one of the above problems to some extent.

Accordingly, an electric connector is provided which comprises the features of claim 1. The electrical connector has a plurality of advantages, such as a convenience of welding, a simple structure, a lower process cost, a stable and credible structure, a high security and so on.

A battery including the above electric connector is also provided.

Furthermore, the electric connector according to the disclosure may have additional technical features as follow.

Each of each connecting sheet and the leading-out sheet is integrally moulded.

In some embodiments, the leading-out sheet includes a bending portion, and the thickness of the bending portion is greater than or equal to that of a remained portion of the leading-out sheet.

In some embodiments, the leading-out sheet includes a horizontal portion, and a plurality of vertical portions connected to the horizontal portion.

In some embodiments, the plurality of connecting sheets is welded to the plurality of vertical portions, respectively.

In some embodiments, each vertical portion comprises a buffer part at a middle portion thereof, and the buffer part is used for matching with a tab.

In some embodiments, each vertical portion includes an arc transition at an edge thereof.

In some embodiments, each vertical portion includes an arc end away from the horizontal portion.

In some embodiments, each connecting sheet is configured with an arc transition at an edge thereof.

In some embodiments, the third vertical limb and the fourth vertical limb are configured to form two welding portions.

In some embodiments, each connecting sheet further comprises a horizontal supporting limb connected to an end of the fourth vertical limb away from the horizontal connecting limb, and extending towards the third vertical limb.

In some embodiments, the horizontal supporting limb is connected to the fourth vertical limb in a manner of an arc transition.

In some embodiments, two connecting sheets are provided, and each connecting sheet includes two welding portions.

Embodiments of a second aspect of the present disclosure provide a battery. The battery includes: a shell, defining an accommodating chamber therein, a cover plate mounted to the shell and configured to seal the accommodating chamber, having an electrode terminal formed thereon, a plurality of winding cores received in the accommodating chamber, and an electric connector according to the first aspect of the present disclosure; the electric connector is received in the accommodating chamber, and the leading-out sheet is connected to the electrode terminal.

In some embodiments, each winding core is provided with a tab, each connecting sheet is welded to the tabs of at least two winding cores by the welding portions.

The battery according to the present disclosure shows a plurality of advantages, such as a convenience of manufacturing, a lower cost, a safe and credible performance and so on.

The connecting sheets welded to tabs and the leading-out sheet are separate parts, so the connecting sheets may be welded to the tabs at first, then the leading-out sheet may be welded to the connecting sheets, which may guarantee that a welding head does not interfere with adjacent tabs during a welding process, thus facilitating welding and avoiding damages to tabs.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings, in which:
Fig. 1 is a schematic view of an electric connector in prior art;
Fig. 2 is a schematic view of an electric connector according to an example which is not part of the present invention;
Fig. 3 is a schematic view of an electric connector according to another embodiment of the present disclosure; and
Fig. 4 is a schematic view of a battery according to an embodiment of the present disclosure.

### Reference numerals

battery 1, shell 10, accommodating chamber 11, cover plate 20, tab 30;
electric connector 40;
leading-out sheet 100, horizontal portion 110, vertical portion 120, buffer part 130;
first arc transition 121, arc end 122;
connecting sheet 200, welding portion 210, second arc transition 220, vertical connecting limb 230, first vertical limb 240, second vertical limb 250, horizontal connecting limb 260, third vertical limb 270, fourth vertical limb 280, horizontal supporting limb 290.

### DETAILED DESCRIPTION

Reference will be made in detail to embodiments of the present disclosure, where the same or similar elements and the elements having the same or similar functions are denoted by like reference numerals throughout the descriptions. The embodiments described herein with reference to drawings are explanatory, illustrative, and used to generally understand the present disclosure. The embodiments shall not be construed to limit the present disclosure.

An electric connector 40 according to embodiments of the present disclosure will be described with reference to drawings below.

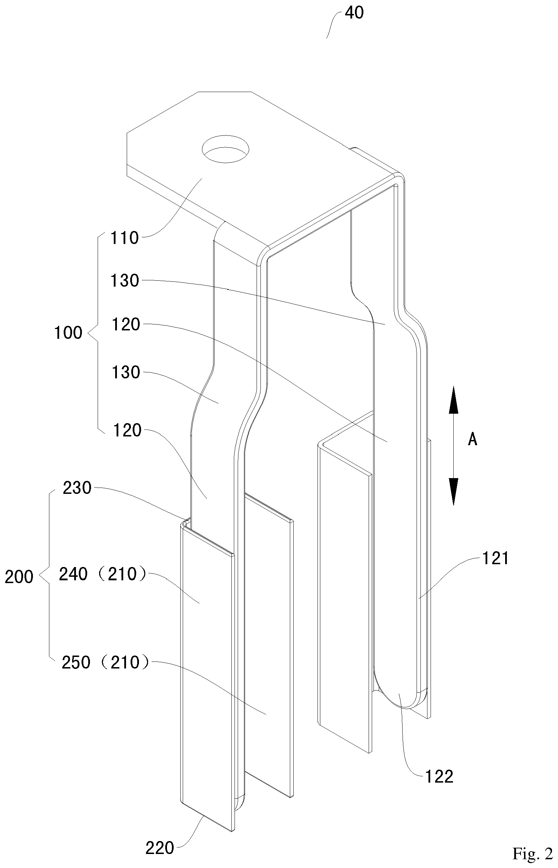

As shown in Figs. 2 to 4, the electric connector 40 includes a leading-out sheet 100 and a plurality of connecting sheets 200.

The plurality of connecting sheets 200 are welded to the leading-out sheet 100, and the leading-out sheet and the plurality of connecting sheets are separate parts, i.e. the electric connector is not an integrated piece. Each connecting sheet 200 includes at least two welding portions 210 configured to be welded to the tabs.

According to the electric connector 40 of the present disclosure, the leading-out sheet is welded to the plurality of connecting sheets 200, and each connecting sheet 200 includes at least two welding portions 210, i.e. each connecting sheet 200 may be welded to at least two tabs, thus the electric connector 40 may be applied to the connection between any number of winding cores, which is not shown in drawings. In addition, by configuring the leading-out sheet 100 and the connecting sheets 200 into non-integrated pieces, an extending direction of the welding portions 210 of the connecting sheets 200 can be made the same as that of the tabs, thus there is no need to carry out a local thinning and twisting process on the electric connector 40, i.e. the electric connector according to the present disclosure does not include a thinned and twisted structure, which may simplify the structure of the electric connector 40 and decrease the process cost of the electric connector 40 on one hand, on the other hand, may avoid the impact on a weak part of the electric connector 40 during the welding process, prevent the electric connector from being broken, and may improve the flow capacity of the electric connector 40, to avoid high local temperature, so as to improve the security.

Moreover, the electric connector 40 is of a non-integrated structure, thus during the welding process, the connecting sheets 200 may be welded to the tabs at first, then the leading-out sheet 100 may be welded to the connecting sheets 200, which may reduce the difficulty of ultra-sonic welding, thus improving the production efficiency and ensuring the welding quality.

Thus, the electric connector 40 according to the present disclosure shows a plurality of advantages, such as a convenience of welding, a simple structure, a lower process cost, a stable and credible structure, a high security and so on.

The electric connector 40 according to embodiments of the present disclosure will be described in detail with reference to drawings.

In some embodiment, as shown in Figs. 2 to 4, the electric connector 40 includes a leading-out sheet 100 and a plurality of connecting sheets 200.

In comparative and exemplary embodiments, two connecting sheets 200 are provided, and each connecting sheet 200 includes two welding portions 210, which is very suitable for the welding of four cores. If four cores (including a first core, a second core, a third core, and a fourth core) are assembled into a battery, the distance between the cores is very small, the cores must be firmly welded without damage to the tabs during the welding process. Because a leading-out sheet 100 and the plurality of connecting sheets 200 of the electric connector 40 according to the present disclosure are separate parts, two connecting sheets 200 may be welded to the tabs of two cores (i.e. the first core and the second core) at first, respectively, the welding is applied to the welding portions 210 of the two connecting sheets 200, i.e. the second vertical limb 250 or the fourth vertical limb 280. Then the two cores (i.e. the first core and the second core) may be superposed together, in which the two connecting sheets 200 are disposed on outer sides of the two cores, respectively. And, each of the above two cores (i.e. the first core and the second core) is further superposed with another core (i.e. the third core or the fourth core) at the outer side thereof, and a tab of the further superposed core (i.e. the third core or the fourth core) may be welded to the other welding portion 210 of each connecting sheet 200, i.e. the first vertical limb 240 or the third vertical limb 270. Then, the leading-out sheet 100 also extends into the two connecting sheets 200 and may be welded to the other welding portions 210 of the two connecting sheets 200, i.e. the first vertical limb 240 or the third vertical limb 270. The welding head will not interfere with adjacent tabs during the welding process, thus facilitating welding and avoiding damages to the tabs.

In some embodiments, each of the connecting sheets 200 and the leading-out sheet 100 may be integrally formed. In some embodiments, the leading-out sheet 100 and the connecting sheets 200 may be prepared by stamping molding, which may simplify production processes of the leading-out sheet 100 and the connecting sheets 200 and improve the structural stability and performance stability of the leading-out sheet 100 and the connecting sheets 200.

In some embodiments, the leading-out sheet 100 includes a bending portion. And a thickness of the bending portion is greater than or equal to that of a remained portion of the leading-out sheet 100. In other words, the bending portion of the leading-out sheet 100 is formed by bending with thickening, which may ensure the strength and flow capacity of the bending portion of the leading-out sheet 100 with no loss, so as to further improve the security.

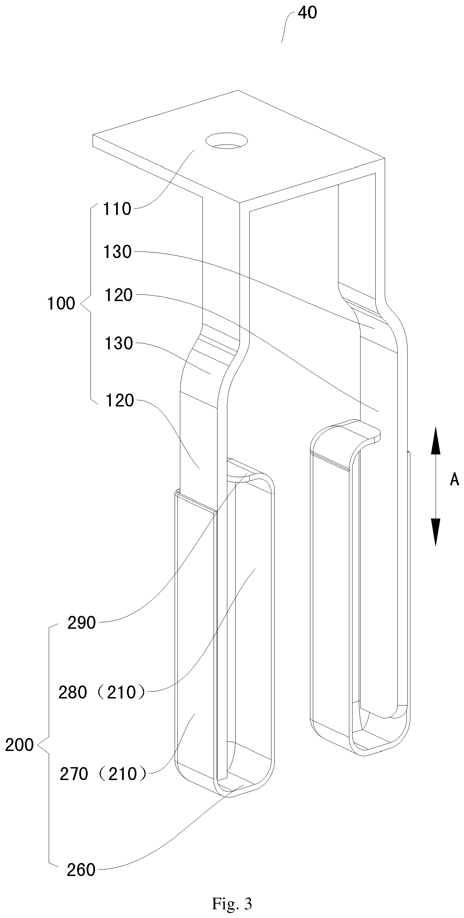

In comparative and exemplary embodiments, as shown in Figs. 2 and 3, the leading-out sheet 100 includes a horizontal portion 110 and a plurality of vertical portions 120, in which the vertical direction is shown by arrow A in figures. The horizontal portion 110 is used for connecting with an electrode terminal of a battery cover plate. The plurality of vertical portions 120 are connected to the horizontal portion 110 and then each connecting sheet 200 is welded to each vertical portion 120. Thus the plurality of vertical portions 120 may connect the plurality of connecting sheets 200 with the horizontal portion 110, such that positions of the connecting sheets 200 are suitable for welding to the tabs.

In comparative and exemplary embodiments, as shown in Figs. 2 and 3, each vertical portion 120 includes a buffer part 130 at the middle portion thereof, and the buffer part 130 has a shape matching with that of a tab, such as an arc shape. An upper and lower part of each vertical portion 120 may be staggered in the horizontal direction via the buffer part 130. Thus, the vertical portions 120 may be arranged closer to the tabs on the one hand, on the other hand, the shape of each buffer part 130 matches with that of an un-compressed part of a core, which may limit positions of the cores and prevent the movement of the cores.

In comparative embodiments, as shown in Fig. 2, each vertical portion 120 includes an arc transition at an edge thereof, i.e. the first arc transition 121, which may prevent the cores from being damaged by the vertical portions 120 during vibration. In some embodiments, each connecting sheet 200 is also configured with an arc transition at an edge thereof, i.e. the second arc transition 220, which may prevent the cores from being damaged by the connecting sheets 200 during vibration.

In comparative embodiments, as shown in Fig. 2, each vertical portion 120 includes an arc end 122 away from the horizontal portion 110. The arc end 122 may be used as an assembly guide, so as to facilitate assembly.

In comparative embodiments, as shown in Fig. 2, each connecting sheet 200 has a substantially U-shaped horizontal cross section. In some embodiments, each connecting sheet includes a vertical connecting limb 230, a first vertical limb 240, and a second vertical limb 250. The vertical connecting limb 230, the first vertical limb 240 and the second vertical limb 250 are located outside of the vertical portion 120 of the leading-out sheet 100. The first vertical limb 240 and the second vertical limb 250 are connected to two side edges of the vertical connecting limb 230 respectively and spaced apart from each other, the first vertical limb 240 is welded to the vertical portion 120 of the leading-out sheet 100, and the first vertical limb 240 and the second vertical limb 250 are configured to form two welding portions 210 respectively. In other words, the first vertical limb 240 is welded to the leading-out sheet 100 and a tab, while the second vertical limb 250 is only welded to a tab. Thus spaces occupied by the leading-out sheet 100 and the connecting sheets 200 may be overlapped, which may significantly reduce the space occupied by the electric connector 40 and maximize the battery capacity.

In exemplary embodiments, as shown in Fig. 3, each connecting sheet 200 has a substantially U-shaped vertical cross section. In some embodiments, each connecting sheet 200 includes a horizontal connecting limb 260, a third vertical limb 270, and a fourth vertical limb 280. The third vertical limb 270 and the fourth vertical limb 280 are located outside of the vertical portion 120 of the leading-out sheet 100, and the horizontal connecting limb 260 is located below the vertical portion 120 of the leading-out sheet 100. The third vertical limb 270 and the fourth vertical limb 280 are connected to two ends of the horizontal connecting limb 260 respectively and spaced apart from each other, the third vertical limb 270 is welded to the vertical portion 120 of the leading-out sheet 100, and the third vertical limb 270 and the fourth vertical limb 280 are configured to form two welding portions 210 respectively. In other words, the third vertical limb 270 is welded to the leading-out sheet 100 and a tab, while the fourth vertical limb 280 is only welded to a tab. Thus spaces occupied by the leading-out sheet 100 and the connecting sheet 200 may be overlapped, which may significantly reduce the space occupied by the electric connector 40 and maximize the battery capacity.

In exemplary embodiments, as shown in Fig. 3, each connecting sheet 200 further includes a horizontal supporting limb 290. The horizontal supporting limb 290 is connected to an end of the fourth vertical limb 280 away from the horizontal connecting limb 260, and extends toward the third vertical limb 270. The horizontal supporting limb 290 has an arc transition to connect with the fourth vertical limb 280. With the above structure, the connecting sheets 200 can be prevented from scratching tabs and deforming.

The battery 1 according to embodiments of the present disclosure will be described with reference to drawings below.

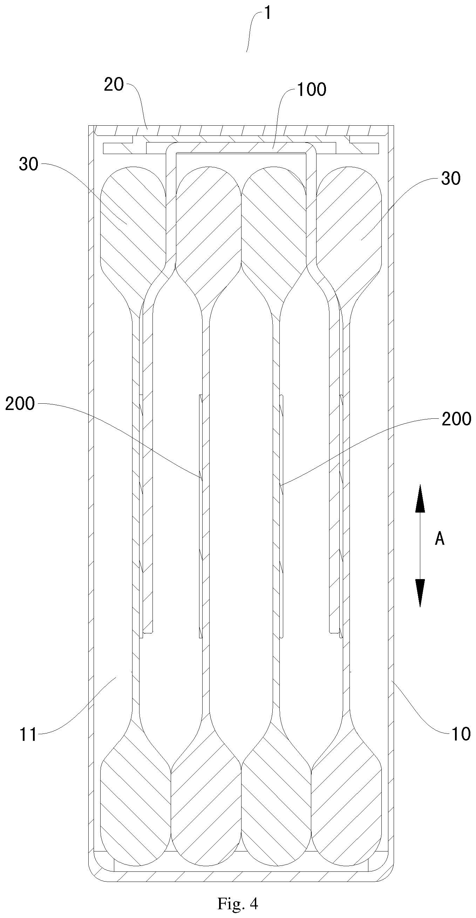

As shown in Fig. 4, the battery 1 according the present disclosure includes a shell 10, a cover plate 20, a plurality of winding cores, and an electric connector.

The shell 10 defines an accommodating chamber 11 therein. The cover plate 20 is mounted to the shell 10 and configured to seal the accommodating chamber 11. The cover plate 20 has an electrode terminal formed thereon, which is not shown in drawings. The plurality of winding cores is received in the accommodating chamber 11. The electric connector is the electric connector 40 according to embodiments of the present disclosure. The electric connector 40 is received in the accommodating chamber 11, and the leading-out sheet 100 is connected to the electrode terminal. In some embodiments, each winding core is provided with a tab 30, and each connecting sheet 200 is welded to the tabs 30 of at least two winding cores by the welding portions 210.

The battery 1 according to the present disclosure, with the electric connector 40 according to the present disclosure, shows a plurality of advantages, such as a convenience of manufacturing, a lower cost, a safe and credible performance and so on.

Other structures and operations of the battery 1 according to embodiments of the present disclosure are known to those skilled in the art, and thus will not be described in detail here.

In the specification, it is to be understood that terms such as "center", "longitudinal", "transverse", "length," "width," "thickness," "upper," "lower," "front," "rear," "left," "right," "vertical," "horizontal," "top," "bottom," "inner," "outer", "clockwise", and "counterclockwise" should be construed to refer to the orientation as then described or as shown in the drawings under discussion. These relative terms are for convenience of description and do not require that the present disclosure be constructed or operated in a particular orientation, thus shall not be construed to limit the present disclosure.

In addition, terms such as "first" and "second" are used herein for purposes of description and are not intended to indicate or imply relative importance or significance or to imply the number of indicated technical features. Thus, the feature defined with "first" and "second" may include one or more of this feature. In the description of the present disclosure, "a plurality of' means at least two, e.g. two, three and so on, unless specified otherwise.

In the description of the present disclosure, it should be understood that, unless specified or limited otherwise, the terms "mounted," "supported," "connected," and "coupled" and variations thereof are used broadly and encompass such as permanent connection, detachable connection, or integrally connection; mechanical or electric mountings, connections and couplings; direct connection or indirect connection via intermediary; also can be inner mountings, connections and couplings of two components, which can be understood by those skilled in the art according to the detail embodiment of the present disclosure.

In the present invention, unless specified or limited otherwise, a first feature disposed "above" or "below" a second feature may include the first and second features are in direct contact, and may also include the first and second features are in contact not directly but through an additional feature between them. Further, the first feature located "above", "top" and "upper" the second features includes the first feature located directly and/or obliquely above the second feature, or simply represents a horizontal height of the first feature is more than that of the second feature. The first feature located "under", "below" and "lower" the second feature includes the first feature located directly and/or obliquely below the second feature, or simply represents a horizontal height of the first feature is less than that of the second feature.

Reference throughout this specification to "one embodiment", "some embodiments," "an embodiment", "a specific example," or "some examples," means that a particular feature, structure, material, or characteristic described in connection with the embodiment or example is included in at least one embodiment or example of the present disclosure. Thus, the appearances of the phrases in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated that the above embodiments are explanatory and cannot be construed to limit the present disclosure, and changes, alternatives, and modifications can be made in the embodiments without departing from scope of the present disclosure, as defined by the appended claims, by those skilled in the art.

## Claims

1. An electric connector (40), comprising:
a leading-out sheet (100), and
a plurality of connecting sheets (200) welded to the leading-out sheet (100), each connecting sheet (200) comprising at least two welding portions (210);
wherein the leading-out sheet (100) and each connecting sheet (200) are separate parts,
**characterized in that**
each connecting sheet (200) has a substantially U-shaped vertical cross section, and each connecting sheet (200) comprises:
a horizontal connecting limb (260),
a third vertical limb (270) connected to the horizontal connecting limb (260) and welded to the leading-out sheet (100), and
a fourth vertical limb (280) connected to the horizontal connecting limb (260) and spaced apart from the third vertical limb (270),
further comprising a horizontal supporting limb (290) connected to an end of the fourth vertical limb (280) away from the horizontal connecting limb (260), the horizontal supporting limb (290) extending toward the third vertical limb (270), wherein the horizontal supporting limb (290) has an arc transition to connect with the fourth vertical limb (280).

2. The electric connector (40) according to claim 1, wherein each of the leading-out sheet (100) and each connecting sheet (200) is integrally moulded.

3. The electric connector (40) according to claim 1 or 2, wherein the leading-out sheet (100) comprises a bending portion, and a thickness of the bending portion is greater than or equal to that of a remained portion of the leading-out sheet (100).

4. The electric connector (40) according to any one of claims 1 to 3, wherein the leading-out sheet (100) comprises:
a horizontal portion (110), and
a plurality of vertical portions (120) connected to the horizontal portion (110), wherein the plurality of connecting sheets (200) is preferably welded to the plurality of vertical portions, respectively.

5. The electric connector (40) according to claim 4, wherein each vertical portion (120) comprises a buffer part (130) at a middle portion thereof, upper and lower part of each vertical portion (120) being staggered in the horizontal direction via the buffer part (130), and the buffer part (130) is used for matching with a tab (30).

6. The electric connector (40) according to any one of claims 4 to 5, wherein each vertical portion (120) comprises an arc transition (121) at an edge thereof

7. The electric connector (40) according to any one of claims 4 to 6, wherein each vertical portion (120) comprises an arc end away from the horizontal portion (110).

8. The electric connector (40) according to any one of claims 1 to 7, wherein each connecting sheet (200) is configured with an arc transition (220) at an edge thereof.

9. The electric connector (40) according to any of the previous claims, wherein the third vertical limb (270) and the fourth vertical limb (280) are configured to form two welding portions.

10. The electric connector (40) according to any of the previous claims, wherein each connecting sheet (200) further comprises a horizontal supporting limb (290) connected to an end of the fourth vertical limb (280) away from the horizontal connecting limb (260), and extending toward the third vertical limb (270), wherein the horizontal supporting limb (290) is preferably connected to the fourth vertical limb (280) in a manner of an arc transition.

11. The electric connector (40) according to any one of claims 1 to 10, wherein two connecting sheets (200) are provided, and each connecting sheet comprises two welding portions.

12. A battery (1), comprising:
a shell (10) defining an accommodating chamber (11) therein,
a cover plate (20) mounted to the shell (10) and configured to seal the accommodating chamber (11), having an electrode terminal formed thereon,
a plurality of winding cores received in the accommodating chamber (11), and
an electric connector (40) according to any one of claims 1 to 11;
wherein the electric connector (40) is received in the accommodating chamber (11), and the leading-out sheet (200) is connected to the electrode terminal.

13. The battery (1) according to claim 12, wherein each winding core is provided with a tab (30), each connecting sheet (200) of the electric connector (40) is welded to the tabs (30) of at least two winding cores by the welding portions.

## Patentansprüche

1. Elektrischer Steckverbinder (40), umfassend:
ein nach außen führendes Blech (100), und
eine Vielzahl von Verbindungsblechen (200), die an das nach außen führende Blech (100) geschweißt sind, wobei jedes Verbindungsblech (200) mindestens zwei Schweißabschnitte (210) umfasst;
wobei das nach außen führende Blech (100) und jedes Verbindungsblech (200) getrennte Teile sind;
**dadurch gekennzeichnet, dass**
jedes Verbindungsblech (200) einen im Wesentlichen U-förmigen vertikalen Querschnitt aufweist, und
jedes Verbindungsblech (200) umfasst:
ein horizontales Verbindungsglied (260),
ein drittes vertikales Glied (270), das mit dem horizontalen Verbindungsglied (260) verbunden ist und an das nach außen führende Blech (100) geschweißt ist, und
ein viertes vertikales Glied (280), das mit dem horizontalen Verbindungsglied (260) verbunden ist und von dem dritten vertikalen Glied (270) beabstandet ist,
weiter umfassend ein horizontales Trägerglied (290), das mit einem Ende des vierten vertikalen Glieds (280) entfernt von dem horizontalen Verbindungsglied (260) verbunden ist, wobei sich das horizontale Trägerglied (290) zu dem dritten vertikalen Glied (270) erstreckt, wobei das horizontale Trägerglied (290) einen Bogenübergang zum Verbinden mit dem vierten vertikalen Glied (280) aufweist.

2. Elektrischer Steckverbinder (40) nach Anspruch 1, wobei jedes von dem nach außen führenden Blech (100) und jedes Verbindungsblech (200) angeformt ist.

3. Elektrischer Steckverbinder (40) nach Anspruch 1 oder 2, wobei das nach außen führende Blech (100) einen Biegeabschnitt umfasst, und eine Dicke des Biegeabschnitts größer oder gleich jener eines verbliebenen Abschnitts des nach außen führenden Blechs (100) ist.

4. Elektrischer Steckverbinder (40) nach einem der Ansprüche 1 bis 3, wobei das nach außen führende Blech (100) umfasst:
einen horizontalen Abschnitt (110), und
eine Vielzahl von vertikalen Abschnitten (120), die mit dem horizontalen Abschnitt (110) verbunden sind, wobei die Vielzahl von Verbindungsblechen (200) vorzugsweise jeweils an die Vielzahl von vertikalen Abschnitten geschweißt ist.

5. Elektrischer Steckverbinder (40) nach Anspruch 4, wobei jeder vertikale Abschnitt (120) ein Pufferteil (130) an einem mittleren Abschnitt davon umfasst, wobei ein oberer und unterer Teil jedes vertikalen Abschnitts (120) in der horizontalen Richtung über das Pufferteil (130) gestaffelt sind, und das Pufferteil (130) zum Übereinstimmen mit einer Lasche (30) verwendet wird.

6. Elektrischer Steckverbinder (40) nach einem der Ansprüche 4 bis 5, wobei jeder vertikale Abschnitt (120) einen Bogenübergang (121) an einer Kante davon umfasst.

7. Elektrischer Steckverbinder (40) nach einem der Ansprüche 4 bis 6, wobei jeder vertikale Abschnitt (120) ein Bogenende entfernt von dem horizontalen Abschnitt (110) umfasst.

8. Elektrischer Steckverbinder (40) nach einem der Ansprüche 1 bis 7, wobei jedes Verbindungsblech (200) mit einem Bogenübergang (220) an einer Kante davon konfiguriert ist.

9. Elektrischer Steckverbinder (40) nach einem der vorstehenden Ansprüche, wobei das dritte vertikale Glied (270) und das vierte vertikale Glied (280) konfiguriert sind, um zwei Schweißabschnitte zu bilden.

10. Elektrischer Steckverbinder (40) nach einem der vorstehenden Ansprüche, wobei jedes Verbindungsblech (200) weiter ein horizontales Trägerglied (290) umfasst, das mit einem Ende des vierten vertikalen Glieds (280) entfernt von dem horizontalen Verbindungsglied (260) verbunden ist, und sich zu dem dritten vertikalen Glied (270) erstreckt, wobei das horizontale Trägerglied (290) vorzugsweise mit dem vierten vertikalen Glied (280) in einer Art eines Bogenübergangs verbunden ist.

11. Elektrischer Steckverbinder (40) nach einem der Ansprüche 1 bis 10, wobei zwei Verbindungsbleche (200) bereitgestellt werden, und jedes Verbindungsblech zwei Schweißabschnitte umfasst.

12. Batterie (1), umfassend:
eine Schale (10), die eine Aufnahmekammer (11) darin definiert,
eine Abdeckplatte (20), die an der Schale (10) montiert ist und konfiguriert ist, um die Aufnahmekammer (11) abzudichten, einen Elektrodenanschluss, der darauf gebildet ist, aufweisend,
eine Vielzahl von Wickelkernen, die in der Aufnahmekammer (11) empfangen werden, und
einen elektrischen Steckverbinder (40) nach einem der Ansprüche 1 bis 11;
wobei der elektrische Steckverbinder (40) in der Aufnahmekammer (11) empfangen wird und das nach außen führende Blech (200) mit dem Elektrodenanschluss verbunden ist.

13. Batterie (1) nach Anspruch 12, wobei jeder Wickelkern mit einer Lasche (30) bereitgestellt ist, wobei jedes Verbindungsblech (200) des elektrischen Steckverbinders (40) durch die Schweißabschnitte an die Laschen (30) von mindestens zwei Wickelkernen geschweißt ist.

## Revendications

1. Connecteur électrique (40) comprenant :
une tôle de sortie (100) et
une pluralité de tôles de connexion (200) soudées à la tôle de sortie (100), chaque tôle de connexion (200) comprenant au moins deux parties de soudure (210),
dans lequel la tôle de sortie (100) et chaque tôle de connexion (200) sont des parties séparées,
**caractérisé en ce que** :
chaque tôle de connexion (200) a une section transversale verticale sensiblement en forme de U et chaque tôle de connexion (200) comprend :
une branche de connexion horizontale (260),
une troisième branche verticale (270) connectée à la branche de connexion horizontale (260) et soudée à la tôle de sortie (100) et
une quatrième branche verticale (280) connectée à la branche de connexion horizontale (260) et séparée de la troisième branche verticale (270),
comprenant en outre une branche de support horizontale (290) connectée à une extrémité de la quatrième branche verticale (280) à l'opposé de la branche de connexion horizontale (260), la branche de support horizontale (290) s'étendant vers la troisième branche verticale (270), dans lequel la branche de support horizontale (290) a une transition en arc pour se connecter à la quatrième branche verticale (280).

2. Connecteur électrique (40) selon la revendication 1, dans lequel chacune de la tôle de sortie (100) et de chaque tôle de connexion (200) est moulée d'un seul tenant.

3. Connecteur électrique (40) selon la revendication 1 ou 2, dans lequel la tôle de sortie (100) comprend une partie de cintrage et une épaisseur de la partie de cintrage est supérieure ou égale à celle de la partie restante de la tôle de sortie (100).

4. Connecteur électrique (40) selon l'une quelconque des revendications 1 à 3, dans lequel la tôle de sortie (100) comprend :
une partie horizontale (110) et
une pluralité de parties verticales (120) raccordées à la partie horizontale (110), dans lequel la pluralité de tôles de connexion (200) est de préférence soudée à la pluralité de parties verticales, respectivement.

5. Connecteur électrique (40) selon la revendication 4, dans lequel chaque partie verticale (120) comprend une partie tampon (130) dans sa partie centrale, les parties supérieure et inférieure de chaque partie verticale (120) étant échelonnées dans la direction horizontale via la partie tampon (130), et la partie tampon (130) est utilisée pour s'adapter à une patte (30).

6. Connecteur électrique (40) selon l'une quelconque des revendications 4 à 5, dans lequel chaque partie verticale (120) comprend une transition en arc (121) sur un de ses bords.

7. Connecteur électrique (40) selon l'une quelconque des revendications 4 à 6, dans lequel chaque partie verticale (120) comprend une extrémité en arc opposée à la partie horizontale (110).

8. Connecteur électrique (40) selon l'une quelconque des revendications 1 à 7, dans lequel chaque tôle de connexion (200) est configurée avec une transition en arc (220) sur un de ses bords.

9. Connecteur électrique (40) selon l'une quelconque des revendications précédentes, dans lequel la troisième branche verticale (270) et la quatrième branche verticale (280) sont configurées pour former deux parties de soudure.

10. Connecteur électrique (40) selon l'une quelconque des revendications précédentes, dans lequel chaque tôle de connexion (200) comprend en outre une branche de support horizontale (290) connectée à une extrémité de la quatrième branche verticale (280) opposée à la branche de connexion horizontale (260) et s'étendant vers la troisième branche verticale (270), dans lequel la branche de support horizontale (290) est de préférence connectée à la quatrième branche verticale (280) à la manière d'une transition en arc.

11. Connecteur électrique (40) selon l'une quelconque des revendications 1 à 10, dans lequel deux tôles de connexion (200) sont prévues et chaque tôle de connexion comprend deux parties de soudure.

12. Batterie (1) comprenant :
une coque (10) définissant une chambre réceptrice (11) à l'intérieur,
une plaque couvrante (20) montée sur la coque (10) et configurée pour étancher la chambre réceptrice (11) et sur laquelle est formée une borne d'électrode,
une pluralité d'axes d'enroulement reçus dans la chambre réceptrice (11) et
un connecteur électrique (40) selon l'une quelconque des revendications 1 à 11 ;
dans laquelle le connecteur électrique (40) est reçu dans la chambre réceptrice (11) et la tôle de sortie (200) est connectée à la borne d'électrode.

13. Batterie (1) selon la revendication 12, dans laquelle chaque axe d'enroulement est pourvu d'une patte (30), chaque tôle de connexion (200) du connecteur électrique (40) est soudée aux pattes (30) d'au moins deux axes d'enroulement par les parties de soudure.
